# EUROPEAN PATENT SPECIFICATION

(11) **EP 4 294 602 B1**
(45) Date of publication and mention of the grant of the patent: **01.01.2025**
(21) Application number: 21830382.4
(22) Date of filing: 01.11.2021
(51) Int. Cl.: B25J 5/00, B25J 11/00

(54) **AUTONOMOUS MOBILE PLATFORM**
AUTONOME MOBILE PLATTFORM
PLATEFORME MOBILE AUTONOME

(43) Date of publication of application: 27.12.2023
(73) Proprietor: Technicka Univerzita v Liberci, 46001 Liberec 1 (CZ)
(72) Inventor: MASIN, Ivan, 460 01 Liberec 1 (CZ); PETRU, Michal, 460 06 Liberec 6 (CZ)
(74) Representative: Musil, Dobroslav
(86) International application number: PCT/CZ2021/050122
(87) International publication number: WO 2023/072319

(56) References cited:
- US-B1- 9 682 483
- US-B1- 9 827 677

## Description

### Technical field

The invention relates to an autonomous mobile platform comprising means for moving the autonomous mobile platform over designated environment, the means being coupled to a navigation and computing system for controlling the motion of the autonomous mobile platform and for detecting and identifying obstacles along a planned path in the environment in which it moves.

### Background art

An autonomous mobile platform is a ground vehicle that is capable of environment perception and motion without human input. In particular, the autonomous mobile platform can observe its surrounding environment using a variety of sensors and attempt to comprehend the environment by performing various techniques of processing data collected by the sensors. Knowing the environment near the autonomous mobile platform, the autonomous mobile platform can determine a suitable motion plan in this environment. The autonomous mobile platform is capable of moving autonomously on the ground through the surrounding environment between a starting location and an ending location of the provided service and can be used to move cargo or technical means to perform a work operation or to obtain information.

Existing technical solutions of autonomous mobile platforms which are not used for the transport of people or robotic mobile platforms described, for example, in US2021132608 A1 (EP3071009 B1) or US2021181759 A1, use a predominantly rigid structure of the upper body of the autonomous mobile platform or rigid structure of the top cover. These solutions are based on the assumption of targeted avoidance of all obstacles in the planned path of the autonomous mobile platform, using a control system for autonomous driving and a perception system for detecting objects around the autonomous mobile platform, described for example in documents US2019004539 A1 or US10207410 B1.

Other technical solutions use components that are fixedly or movably attached to the top cover to selectively attach objects or other useful devices to the outer surface of the autonomous mobile platform outside the internal storage space, or to detach them, such as US10514690 B1, which describes an autonomous ground based vehicle with an autonomous aerial vehicle (drone) for transporting objects from one location to another.

Document US2019367102 A1 discloses a technical solution allowing a the motion of the front shield arranged in front of the loading surface for the load to two positions (to the open position which protects the front end of the cargo container while driving and to the closed position in which the vertical profile of the autonomous vehicle is reduced while driving without the cargo container). The shield in this embodiment is used to reduce air resistance when driving.

With the advent of mobile robotics and especially autonomous mobile platforms for transporting cargo and technical means (e.g., robotic arms) to a preselected location, technical solutions have appeared in the background art using movable body parts or top covers to fulfil other functions. An autonomous delivery vehicle described in US2021201619 A1 uses a cover panel to create a ramp that allows automatic and/or remotely controlled unloading of delivered items placed in the vehicle. US2021016733 A1 discloses a robotic vehicle bumper with a scissor mechanism which can provide decreasing reversionary impact forces as the bumper is compressed.

US9682483 B1 describes a cleaning robot comprising a mobile drive unit including means for moving the robot in a specified environment, the means being coupled to a navigation and computing system for controlling the robot. The control system directs the robot to the location where it finds objects, which it picks up and stores in its interior space.

US9827677B1 describes a robotic device that includes a control arm with a first end to which a shovel is attached and a second end to which a sweeping tool is attached. The control arm is configured to move the sweeping tool toward the shovel and sweep one or more objects onto the shovel.

None of the above-mentioned technical solutions makes it possible to controllably act on easily movable inanimate obstacles in the planned path of the vehicle which were identified by the autonomous mobile platform or fulfil the function of "relocating an inanimate object in the vicinity of the vehicle".

Moreover, current solutions do not allow physical protection of structures and technical means attached to the surface of the autonomous mobile platform. Document US2019004539 A1 describes a technical solution which allows the lidar to be protected inside a static metal shield in operational mode when the vehicle is moving, or which allows the lidar to be protected when the vehicle is parked by lowering it into the mounting base and body of the vehicle.

The objective of the invention is to provide an autonomous mobile platform with means enabling to transfer inanimate easily movable obstacles situated in the planned path of the autonomous mobile platform.

### Principle of the invention

The invention is described in independent claim 1. Further embodiments are described in the dependent claims.

The objective of the invention is achieved by an autonomous mobile platform whose principle consists in that at least one active shield is rotatably mounted on the circumference of the autonomous mobile platform, the active shield being coupled to an actuator for inducing a rotational motion of the active shield. During its rotational motion, the active shield moves the selected easily movable obstacle out of the planned path of the autonomous mobile platform so that the platform can continue moving along its originally planned path.

### Description of the drawings

Exemplary embodiments of the autonomous mobile platform according to the invention are schematically represented in the enclosed drawings, wherein Fig. 1a shows a perspective view of the autonomous mobile platform with two front active shields in closed position, Fig. 1b shows a perspective view of the autonomous mobile platform with two front active shields in active position, Fig. 2a shows a perspective view of the autonomous mobile platform with a side active shield in closed position, Fig. 2b shows a perspective front view of the autonomous mobile platform with the side active shield in the active position, Fig. 2c shows a perspective rear view of the autonomous mobile platform with the side active shield in active position, Fig. 3a shows a control system of the active shield in closed position, Fig. 3b shows the control system of the active shield in active position, Fig. 4a shows a perspective view of the control system of a tiltable active shield in closed position, Fig. 4b shows a perspective view of the control system of a tiltable active shield in active position, Fig. 5 a top view of the autonomous mobile platform with two front active shields when passing between detected and identified inanimate easily movable obstacles in the planned path of the platform, Fig. 6 shows a top view of the autonomous mobile platform with two front active shields while removing one detected and identified inanimate easily movable obstacle in the planned path of the platform and Fig. 7 is a top view of the autonomous mobile platform as it passes between three fixed obstacles and one detected and identified inanimate easily movable obstacle in the platform path.

### Examples of embodiment

The autonomous mobile platform comprises a chassis provided with wheels coupled to drives, which are part of the means for moving the autonomous mobile platform through a designated environment. These means are coupled to a known navigation and computing system **7** for controlling the motion of the autonomous mobile platform and for detecting and identifying obstacles in the planned path of the autonomous mobile platform in the environment in which it moves. The navigation and computing system **7** comprises a plurality of sensors for monitoring the situation around the autonomous mobile platform, signals of which are processed using various data processing techniques, such as using artificial intelligence. The navigation and computing system **7** is able to distinguish fixed obstacles that the autonomous mobile platform must avoid and inanimate easily movable obstacles which can be removed by the autonomous mobile platform from its planned path by means of active shields **1**, which are rotatably mounted on the circumference of the autonomous mobile platform.

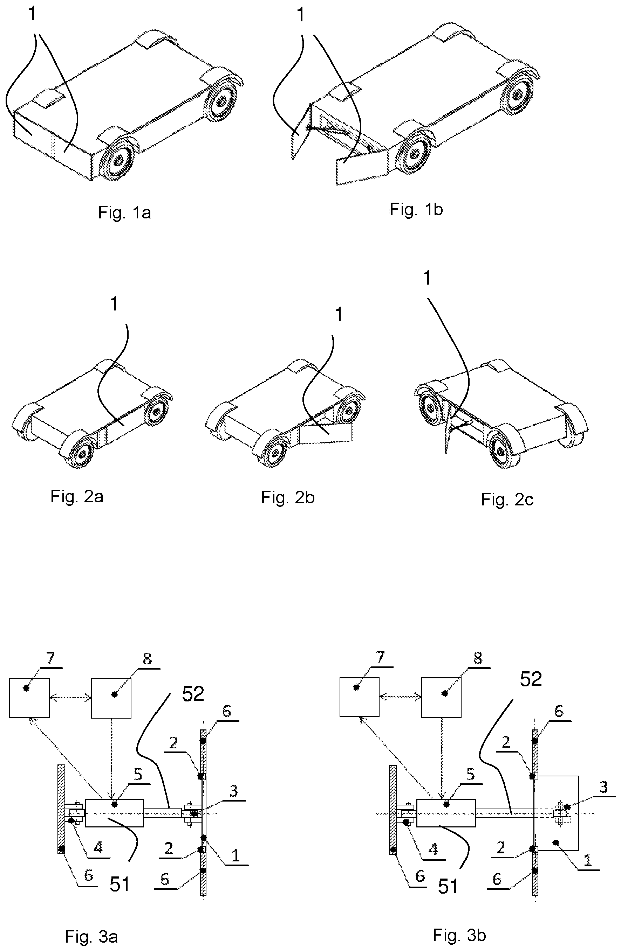

As shown in Figs. 2a - 2c, one active shield **1** is mounted on the circumference of the autonomous mobile platform, namely on one of its sides. In the embodiment shown in Figs. 1a, 1b, two active shields **1** are mounted in the front part of the autonomous mobile platform. It is clear from the combination of these embodiments that the autonomous mobile platform can be provided with two active shields **1** in the front part, two active shields **1** in the rear part and one active shield **1** on each side. In an alternative embodiment, one active shield **1** can be mounted in the front and rear parts over the entire width of the autonomous mobile platform.

In the embodiments shown, the active shield **1_** comprises a planar plate which is rotatably mounted in a known manner on a fixed structure **6** of the autonomous mobile platform, for example on a frame or body, by means of two hinges **2,** the axis of rotation of the active shield **1** being vertical. The plate of the active shield **1** is coupled to a movable part of the actuator **5**, which can be formed, for example, by a double-acting hydraulic or pneumatic cylinder or a linear electric actuator with a rotating screw. The static part of the actuator **5** is coupled to the fixed structure **6** of the autonomous mobile platform, for example the frame or the body. The actuator **5** is coupled to the navigation and computing system **7,** which is connected to a power source **8** used to power the navigation and computing system **7** and to power the actuator **5** or its control system.

The static part **51** of the actuator **5** is connected to the fixed structure **6** of the autonomous mobile platform rotatably by means of a hinge **4** of the static part of the actuator **5,** which is attached to the fixed structure **6** of the autonomous mobile platform. A pin is mounted in the hinge **4** of the static part **51** of the actuator **5,** the pin secures in the hinge **4** an **eye** formed on the static part **51** of the actuator **5.** The rotatable mounting of the static part **51** of the actuator **5** on the fixed structure of the autonomous mobile platform can also be formed in another suitable known manner, for example by a joint.

The movable part **52** of the actuator **5** is connected to the plate of the active shield **1** rotatably by means of a hinge **3** of the movable part **52** of the actuator **5,** which is fixedly mounted on the inner side of the plate of the active shield **1**. A pin is mounted in the hinge **3** of the movable part **52** of the actuator **5,** the pin secures in the hinge **3** an eye formed on the movable part **52** of the actuator **5.** The rotatable mounting of the movable part **52** of the actuator **5** on the fixed structure of the autonomous mobile platform can also be formed in another suitable known manner, for example by a joint.

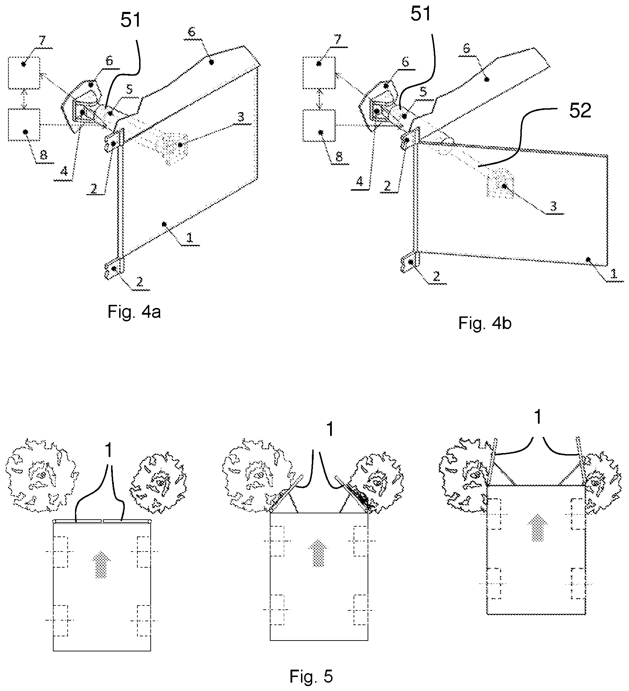

Before starting the journey, the navigation and computing system **7** of the autonomous mobile platform creates, based on the coordinates or other parameters entered, a plan of the path along which the autonomous mobile platform is to move in the given environment. While driving, the navigation and computing system **7** monitors the surroundings of the autonomous mobile platform using various sensor systems and various techniques for processing the data collected by the sensors, such as artificial intelligence data processing. As soon as the navigation and computing system **7** detects and identifies an inanimate, easily movable obstacle in its planned path, it evaluates which of the active shields **1** can be used to remove the obstacle and the actuator **5** of the relevant active shield **1** issues a command to initiate action. The active shield **1** starts to rotate and moves the obstacle out of the planned path of the autonomous mobile platform. The movable part **52** of the actuator **5** starts to extend in a direction away from the fixed structure of the autonomous mobile platform, the eye of the movable part **52** of the actuator rests on the hinge **3** pin of the movable part **52** of the actuator **5** and thus exerts a force on the plate of the active shield **1**. The plate of the active shield **1** begins to rotate in the axis **2** of the hinges **2** of the plate of the active shield **1** in a direction away from the fixed structure **6** of the autonomous mobile platform (see Figs. 3b, 4b) so as to extend beyond the contour of the fixed structure **6** of the platform. The final position of the extension of the movable part **52** of the actuator **5** and the position of the plate relative to the fixed structure **6,** as well as the time of extension of the movable part **52** of the actuator **5,** is controlled by the navigation and computing system **7** of the platform, which performs, in addition to observing and evaluating the situation around the autonomous mobile platform by means of various sensors and various techniques for processing the data collected by the sensors, also the evaluation of the position of the movable part **52** of the actuator **5.** At the same time, the navigation and computing system **7** monitors the danger of exceeding the adjustable limit force for the motion of the actuator **5** from the current energy consumption by the energy source **7** for the motion of the actuator **5** and in the event of exceeding this force, the navigation and computing system **7** stops the motion of the actuator 5, returns it to its original position and issues a command to the autonomous mobile platform to avoid the obstacle which could not be removed. The rotation of the plate of the active shield **1** back to the tilted position (see Figs. 3a, 4a) is controlled by the navigation and computing system **7,** which after moving the obstacle out of the planned path of the autonomous mobile platform issues an impulse to activate the actuator **5,** whose movable part **52** begins to slide towards the fixed structure **6** of the platform, the eye of the movable part **52** pulls the hinge **3** pin of the movable part **52** of the actuator **5** and thus exerts a force on the plate of the active shield **1**, which begins to rotate in the axis **2** of the hinges towards the fixed structure **6** of the platform so that in the end position (see Figs. 1a, 2a 3a and 4a), it does not extend beyond the plan contour of the fixed structure **6** of the autonomous mobile platform.

Examples of operation of the active shields **1** of the autonomous mobile platform are shown in Figs. 5 to 7. Fig. 5 shows the autonomous mobile platform in a left to right direction when approaching two obstacles which were detected by the navigation and computing system **7** and identified as inanimate and easily movable, for example, two piles of leaves or waste. Upon arrival at such obstacles, the navigation and computing system **7** issues a command to start the actuators **5** of the two active shields **1**, as shown in the middle, and the obstacles are moved by the front active shields **1** out of the planned path of the autonomous mobile platform, which continues to move forward along the original planned path, as shown on the right-hand side.

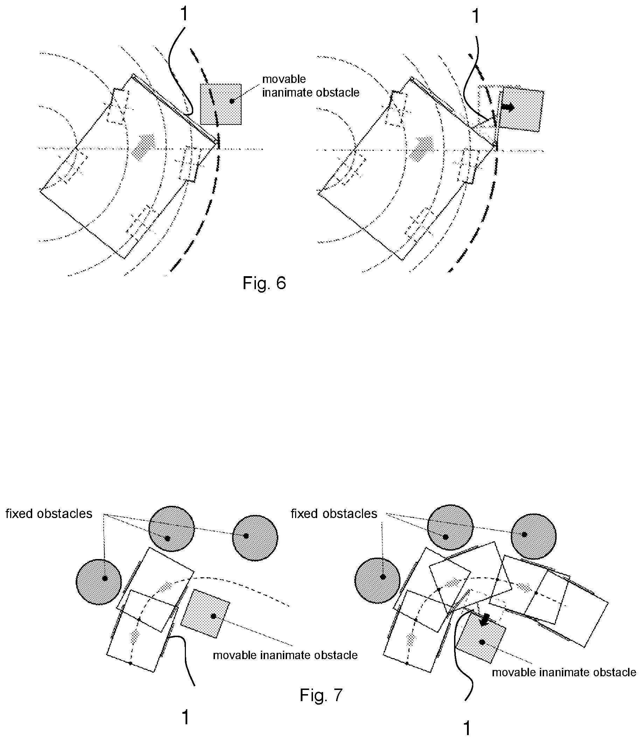

Fig. 6 shows the autonomous mobile platform moving along a circular path. The left part of Fig. 6 shows the arrival of the platform at the obstacle which is situated in front of the right-hand side of the platform and was detected by the navigation and computing system **7** and identified as inanimate and easily movable, for example, a box or packaging of goods. Upon arrival at such an obstacle, the navigation and computing system **7** issues a command to start the operation of the actuator **5** of the right-hand active shield **1_,** which by its rotation removes the obstacle from the platform path, as shown on the right-hand side, and the platform can continue moving along its planned path.

Fig. 7 shows on the left-hand side the arrival of the autonomous mobile platform at three fixed obstacles which are situated in the planned path of the platform, are detected by the navigation and computing system **7** and identified as fixed obstacles to be avoided. At the same time, the navigation and computing system **7** detects and identifies an inanimate easily movable obstacle, which is situated on the right-hand side of the path of the platform as it avoids the fixed obstacles. The navigation and computing system **7** of the autonomous mobile platform issues a command to start the actuator **5** of the right-hand active shield **1**, which by its rotation moves the easily movable obstacle out of the path of the platform as it gets around the fixed obstacles, after which the platform passes through the section and continues moving along the planned path.

### Industrial applicability

The autonomous mobile platform with at least one active shield is capable of exerting force on the vehicle-identified easily movable inanimate obstacles (snow, soil, waste, etc.) and objects (boxes, packaging, bushes, curtains in construction openings, tarpaulins, etc.) in an environment proximate to the autonomous mobile platform, which allows to choose a more advantageous and shorter trajectory of the motion of the autonomous mobile platform which will not have to avoid the identified inanimate easily movable obstacle or object in the vicinity of the vehicle, but can move it by exerting direct force with the appropriate direction of force (push away, shove, move, etc.) to a position more advantageous to achieve the goal of the autonomous mobile platform along the planned path.

## Claims

1. An autonomous mobile platform comprising means for moving the autonomous mobile platform through a designated environment, these means being coupled to a navigation and computing system for controlling the motion of the autonomous mobile platform and for detecting and identifying obstacles in the planned path in the environment in which it moves, **characterized in that** at least one active shield (1) is rotatably mounted on the circumference of the autonomous mobile platform, the active shield (1) being coupled to an actuator (5) to cause the active shield (1) to rotate so as to remove an inanimate easily movable obstacle identified and detected by the computing system (7) out of the planned path of the autonomous mobile platform, wherein the obstacle is moved on the substrate of the environment on which the autonomous mobile platform is moving.

2. The autonomous mobile platform according to claim 1, **characterized in that** the active shield (1) comprises a plate rotatably mounted in a hinge (2) which is fixedly mounted on a fixed structure (6) of the autonomous mobile platform, wherein the axis of rotation of the active shield is vertical and the outer surface of the plate is in contact with the inanimate easily movable obstacle.

3. The autonomous mobile platform according to claim 2, **characterized in that** the plate of the active shield (1) is coupled to a movable part of the actuator (5), whose static part is coupled to the fixed structure (6) of the autonomous mobile platform.

4. The autonomous mobile platform according to any of the preceding claims, **characterized in that** the computing system (7) is provided with means for monitoring the limit force for the movement of the actuator (5) when moving an obstacle and, in the event of the limit force being exceeded, a command is issued by computing system (7) to return the actuator (5) and go around the obstacle.

## Patentansprüche

1. Autonome mobile Plattform, die Mittel zum Bewegen der autonomen mobilen Plattform auf einer bestimmten Umgebung aufweist, die mit einem Navigations- und Rechensystem gekoppelt sind, um die Bewegung der autonomen mobilen Plattform zu steuern und Hindernisse in der geplanten Bahn in der Umgebung zu erkennen und zu identifizieren, in der sie sich bewegt, **dadurch gekennzeichnet, dass** auf dem Umfang der autonomen mobilen Plattform mindestens ein aktiver Schild (1) drehbar gelagert ist, der mit einem Aktuator (5) zum Veranlassen einer Drehbewegung des aktiven Schildes (1) zum Verschieben eines durch das Rechensystem (7) identifizierten und erkannten unbelebten, einfach verlegbaren Hindernisses außerhalb der geplanten Bahn der autonomen mobilen Plattform gekoppelt ist, wobei das jeweilige Hindernis auf dem Untergrund der Umgebung verlegt wird, auf dem sich die autonome mobile Plattform bewegt.

2. Autonome mobile Plattform nach dem Anspruch 1, **dadurch gekennzeichnet, dass** der aktive Schild (1) eine in einer Aufhängung (2) drehbar gelagerte Platte aufweist, die an der festen Konstruktion (6) der autonomen mobilen Plattform fest gelagert ist, wobei die Drehachse des aktiven Schildes senkrecht ist und die Außenfläche der Platte mit dem unbelebten, einfach verlegbaren Hindernis im Kontakt steht.

3. Autonome mobile Plattform nach dem Anspruch 2, **dadurch gekennzeichnet, dass** die Platte des aktiven Schildes (1) mit dem beweglichen Teil des Aktuators (5) gekoppelt ist, dessen statischer Teil mit der festen Konstruktion (6) der autonomen mobilen Plattform gekoppelt ist.

4. Autonome mobile Plattform nach einem der vorangehenden Ansprüche, **dadurch gekennzeichnet, dass** das Rechensystem (7) die Mittel zur Überwachung der Grenzkraft für die Bewegung des Aktuators (5) beim Verlegen des Hindernisses aufweist und bei deren Überschreitung ein Befehl zum Zurückfahren des Aktuators (5) und zum Umfahren des Hindernisses ausgibt.

## Revendications

1. Plate-forme mobile autonome comprenant des moyens pour déplacement de la plate-forme mobile autonome dans un environnement défini, couplés à un système informatique de navigation pour contrôler le mouvement de la plate-forme mobile autonome et pour détecter et identifier des obstacles sur le chemin planifié dans l'environnement dans lequel la plate-forme se déplace, **caractérisée en ce qu'**au moins un bouclier actif (1) est monté de manière rotative sur la circonférence de la plate-forme mobile autonome, couplé à un actionneur (5) pour faire pivoter le bouclier actif (1) afin de déplacer un obstacle inanimé, facilement déplaçable, identifié et reconnu par un système informatique (7) en dehors de la trajectoire prévue pour la plate-forme mobile autonome, l'obstacle étant déplacé sur la surface de l'environnement sur laquelle la plate-forme mobile autonome se déplace.

2. Plate-forme mobile autonome selon la revendication 1, **caractérisée en ce que** le bouclier actif (1) comprend une plaque montée de manière rotative dans une charnière (2) qui est montée de manière fixe sur une structure fixe (6) de la plate-forme mobile autonome, tandis que l'axe de rotation du bouclier actif est vertical et la surface extérieure de la plaque est en contact avec un obstacle inanimé facilement déplaçable.

3. Plate-forme mobile autonome selon la revendication 2, **caractérisée en ce que** la plaque du bouclier actif (1) est couplée à la partie mobile de l'actionneur (5), dont la partie statique est couplée à la structure fixe (6) de la plate-forme mobile autonome.

4. Plate-forme mobile autonome selon l'une des revendications précédentes, **caractérisée en ce que** le système informatique (7) est pourvu de moyens pour surveiller la force limite de déplacement de l'actionneur (5) lors du déplacement de l'obstacle et, en cas de dépassement de la force limite, donner l'ordre pour ramener l'actionneur (5) et contourner l'obstacle.
